# EUROPEAN PATENT SPECIFICATION

(11) **EP 3 617 050 B1**
(45) Date of publication and mention of the grant of the patent: **12.10.2022**
(21) Application number: 18210016.4
(22) Date of filing: 04.12.2018
(51) Int. Cl.: B62J 17/02, B62K 11/10, B62J 45/00, B62J 9/12

(54) **STRADDLED VEHICLE**
GRÄTSCHSITZFAHRZEUG
VÉHICULE À ENFOURCHER

(30) Priority: 31.08.2018 JP 2018163069
(43) Date of publication of application: 04.03.2020
(73) Proprietor: YAMAHA HATSUDOKI KABUSHIKI KAISHA, Iwata-shi, Shizuoka 438-8501 (JP)
(72) Inventor: UCHISAWA, Akinori, Iwata-shi, Shizuoka 438-8501 (JP)
(74) Representative: Grünecker Patent- und Rechtsanwälte PartG mbB

(56) References cited:
- EP-A1- 2 796 351
- EP-A1- 2 979 963
- EP-A1- 3 517 418
- JP-A- 2018 052 438
- US-A1- 2016 090 143

## Description

The present invention relates to a straddled vehicle.

In the related art, there is a straddled vehicle that is provided with a storage pocket that has an open/close lid. This storage pocket is provided at a position in the rear portion of the front cover, facing the driver. A power supply portion for charging a mobile information terminal or the like is disposed in the interior of the storage pocket (see Patent Literature 1).

Patent Literature 1: WO2014/157372

Recently, the need to easily put in or take out elongated articles, such as plastic bottles or smartphones, from of a storage pocket provided in a front cover has increased.
Additionally, there is a demand for ease of access to the power supply portion and good handleability of a wire pulled out from the power supply portion.

However, as described in Patent Literature 1, when the storage pocket has an open/close lid, space is needed for the open/close lid, the open/close mechanism of the open/close lid, and the like. This need for space is a factor that leads to a reduction in the storage capacity of the storage pocket. Moreover, since elongated articles interfere with the open/close lid, it is difficult to store elongated articles in the storage pocket.

Furthermore, a conventional open/close lid is provided at a position facing the driver. As such, the legs of the driver are likely to interfere with the open/close lid when opening and closing the open/close lid. In particular, when putting in and taking out articles from the storage pocket, the legs of the driver are likely to interfere with the articles. Thus, usability of the storage pocket is poor.

Moreover, in cases in which the storage pocket has an open/close lid, it is difficult to pull a wire out from the power supply portion. In particular, since the power supply portion is provided on the far wall of the storage pocket, it is even more difficult to pull the wire out from the power supply portion when articles are stored in the storage pocket.

Document EP2796351 discloses another known saddle vehicle comprising: a head pipe;a front cover covering a front of the head pipe;a steering device rotatably supported by the head pipe;a handle portion including a handlebar fixed to the steering shaft, and a handle cover covering the handlebar;a leg shield provided extending in an up-down direction behind the front cover, the leg shield including an upper surface portion extending rearward and downward from a rear end portion of the front cover, and a rear surface portion extending forward and downward from the upper surface portion;a seat for a driver to sit, the seat being disposed more rearward than the leg shield;a pocket provided on one side in a vehicle width direction of the head pipe, the pocket including an opening provided in the upper surface portion of the leg shield;the pocket having a length in a vehicle up-down direction that is greater than a length in a vehicle front-back direction, and an area of the opening of the pocket in the vehicle back view being greater than an area of the opening of the pocket in the vehicle plan view, wherein the straddled vehicle further comprises:a power supply portion disposed in the pocket more forward of the opening, a charging device being detachable from the power supply portion, an axis of the power supply portion passing through the opening of the pocket, wherein in a vehicle plan view, at least a portion of the opening of the pocket overlaps the handle cover,in a vehicle side view, the opening of the pocket is disposed more upward than a front end portion of a seat surface of the seat, overlapping the power supply portion in a vehicle back view, and not overlapping the power supply portion in the vehicle plan view.

It is an object of the present invention is to make it easier to put in or take out elongated articles, such as plastic bottles, from the storage pocket of a straddled vehicle, and also make it easy to pull a wire out from the power supply portion. According to the present invention said object is solved by a straddled vehicle having the features of independent claim 1. Preferred embodiments are laid down in the dependent claims.
(1) A straddled vehicle according to the invention includes a head pipe, a front cover, a steering shaft, a handle portion, a leg shield, a seat for a driver to sit, a storage pocket, and a power supply portion. The steering shaft is rotatably supported by the head pipe. The handle portion includes a handlebar fixed to the steering shaft, and a handle cover covering the handlebar. The front cover covers the front of the head pipe. The leg shield is provided extending in up-down direction behind the front cover. The leg shield includes an upper surface portion extending rearward and downward from a rear end portion of the front cover, and a rear surface portion extending forward and downward from the upper surface portion. The seat is di sposed more rearward than the leg shield. The storage pocket is lid-less and is provided on one side of the head pipe in the vehicle width direction. The storage pocket includes an opening that is provided in the upper surface portion of the leg shield and that is open upward for putting in or taking out articles. A power supply portion is disposed more forward than the opening in the storage pocket. A charging device can be detachably mounted on the power supply portion and an axis of the power supply portion passes through the opening of the storage pocket. In a vehicle plan view, at least a portion of the opening of the storage pocket overlaps the handle cover. In a vehicle side view, the opening of the storage pocket is disposed more upward than a front end portion of a seat surface of a seat, overlaps the power supply portion in a vehicle back view, and does not overlap the power supply in the vehicle plan view. The storage pocket has a length in the vehicle up-down direction that is greater than a length in the vehicle front-back direction. An area of the opening of the storage pocket in the vehicle back view is greater than an area of the opening of the storage pocket in the vehicle plan view.

First, the inventor of the present invention attempted to increase the capacity of the storage portion by removing the open/close lid of a conventional storage portion. Additionally, the inventor of the present invention attempted to make it easier to pull a wire out from an accessory socket by removing the open/close lid.

However, since the opening of the storage portion is provided at a position facing the driver, even when the open/close lid is removed, the legs of the driver are likely to interfere when putting in or taking out articles, and the ease of taking out articles remained poor. Additionally, since the storage portion extends in the vehicle front-back direction, there is a risk that articles may more easily fall out of the storage portion due to acceleration or deceleration during traveling as a result of the open/close lid being removed.

Therefore, the inventor of the present invention conducted further investigation on the structure of the storage portion, and focused on the shape of the exterior cover of the vehicle. The leg shield, which is a portion of the exterior cover, is disposed behind the front cover in a vehicle side view. The leg shield includes an upper surface extending rearward and downward in the vehicle, and a rear surface extending forward and downward from the rear end of the upper surface in the vehicle from the upper surface.

The inventor of the present invention focused on the upper surface of the leg shield, where the legs of the driver are less likely to interfere when putting in or taking out articles, and provided the opening of the storage portion in the upper surface. Moreover, the inventor of the present invention provided the storage portion with a vertically long shape that extends forward and downward along the rear surface of the leg shield so that the storage portion can store elongated articles such as plastic bottles. As a result, the legs of the driver are less likely to interfere with the articles when putting in or taking out the articles from the storage portion, and it is easier to hold the articles in the storage box due to the rear surface of the leg shield when the vehicle accelerates or decelerates.

Here, since the opening of the storage portion is formed in the upper surface of the leg shield, rainwater is more likely to enter the storage portion when raining, and there is a possibility that rainwater will contact the power supply portion disposed in the storage portion. As such, the inventor of the present invention further investigated measures for preventing water from contacting the power supply portion.

First, the inventor considered using the handle cover to protect from rainwater falling from the sky. To achieve this, the inventor disposed at least a portion of the opening of the storage portion at a position which, in the vehicle plan view, overlaps the handle cover.

That is, by using the handle cover to shield against rainwater falling from the sky, the rainwater is less likely to reach the opening of the storage portion.

Additionally, the inventor focused on the fact that rainwater adhered to the exterior cover, particularly the upper surface of the leg shield, flows along the incline of the upper surface that extends rearward and downward in the vehicle. To address this, the inventor disposed the power supply portion at a position, in the storage portion, forward in the vehicle front-back direction from the opening of the storage portion, and overlapping with the upper surface of the leg shield. Moreover, the inventor disposed the opening so as to overlap the power supply portion in a vehicle back view, and not overlap the power supply in a vehicle plan view.

That is, the inventor disposed the upper surface of the leg shield as an eave, upward from the power supply portion. As a result, the rainwater adhered to the exterior cover flows along the exterior cover and, therefore, is less likely to be led to the power supply portion. Moreover, rainwater directly falling on the power supply portion can be reduced. Additionally, since, in the vehicle back view, the power supply portion is disposed within the opening, the ease of pulling out a wire from the opening is excellent.

That is, in the present invention, the opening of the storage pocket is open upward and a lid is not provided on the storage pocket. As such, elongated articles such as beverage containers can be easily put it and taken out. Additionally, since the storage pocket has a length in the vehicle up-down direction that is greater than a length in the vehicle front-back direction, it is easier to store elongated articles. The axis of the power supply portion passes through the opening and, also, in the vehicle back view, the opening of the storage pocket is provided at a position that overlaps with the power supply portion. As such, the power supply portion disposed within the storage pocket can be easily accessed, and a wire can easily be pulled out from the power supply portion. Moreover, in the vehicle plan view, at least a portion of the opening of the storage pocket overlaps the handle cover. As such, rainwater is less likely to reach the opening. In the vehicle plan view, the opening of the storage pocket is provided at a position that does not overlap with the power supply portion. As such, rainwater can be prevented from directly falling on the power supply portion.

(2) It is preferable that the storage pocket includes a first storage portion including a first bottom portion, and a second storage portion including a second bottom portion that is disposed more upward than the first bottom portion, wherein the power supply portion is disposed in the second bottom portion of the second storage portion. With such a configuration, the power supply portion can be accessed more easily, and a wire can easily be pulled out from the power supply portion.

(3) It is preferable that the second bottom portion of second storage portion is inclined rearward and downward. With such a configuration, the power supply portion can be accessed more easily, and a wire can easily be pulled out from the power supply portion. Additionally, rainwater is less likely to pool in the second storage portion in the event that rainwater enters the second storage portion.

(4) It is preferable that the first bottom portion of the first storage portion is inclined rearward and downward. With such a configuration, articles can be stably stored in the first storage portion.

(5) It is preferable that the first storage portion of the storage pocket further includes a connection portion that connects a front end portion of the first bottom portion of the first storage portion to a rear end portion of the second bottom portion of the second storage portion, and the rear end portion of the second bottom portion of the second storage portion is positioned more rearward than the front end portion of the first bottom portion of the first storage portion. With such a configuration, the rear end portion of the second bottom portion can reduce movement of the articles stored in the first storage portion.

(6) It is preferable that the first bottom portion of first storage portion includes a water drain hole. With such a configuration, rainwater that has entered the first storage portion can be discharged out of the first storage portion.

(7) It is preferable that the first bottom portion of the first storage portion of the storage pocket is positioned lower than the front end portion of the seat surface of the seat. With such a configuration, it is easier to store elongated articles.

(8) It is preferable that the opening of the storage pocket has a maximum dimension in the vehicle width direction that is greater than a maximum dimension in the vehicle front-back direction. With such a configuration, it is easier to put in and take out articles that are long in the vehicle width direction.

(9) It is preferable that the rear surface portion of the leg shield forms at least a portion of a storage space of the storage pocket. With such a configuration, the design of the straddled vehicle can be improved.

(10) It is preferable that the straddled vehicle further includes an inner panel fixed to the front cover or leg shield, wherein the storage space of the storage pocket is defined between the leg shield and the inner panel. With such a configuration, the storage space of the storage pocket can be realized with a simple configuration and the design of the straddled vehicle can be improved.

(11) It is preferable that, in the vehicle plan view, the upper surface portion of the leg shield on a peripheral portion of the opening of the storage pocket overlaps with a portion of the storage space of the storage pocket. With such a configuration, a portion of the upper surface portion serves as an eave that limits the range where rainwater will directly fall into the storage space. Moreover, the articles stored in the storage space can be prevented from falling out of the storage space.

(12) It is preferable that, the storage pocket is capable of storing a beverage container and, when the handle portion is at a position along the vehicle width direction, an axis of the beverage container stored in the storage pocket does not intersect the handle cover of the handle portion. With such a configuration, it is easier to put in and take out a beverage container.

### Advantageous Effects of the Invention

According to the present invention, it is easier to put in or take out elongated articles, such as plastic bottles, from a storage pocket of a straddled vehicle, and it is also easier to pull a wire out from the power supply portion.

### BRIEF DESCRIPTION OF THE DRAWINGS

FIG. 1 is a side view of a straddled vehicle according to an embodiment;
FIG. 2 is a perspective view illustrating a front portion of the straddled vehicle from behind;
FIG. 3 is a drawing illustrating the front portion of the straddled vehicle from behind;
FIG. 4 is a drawing illustrating the front portion of the straddled vehicle from above;
FIG. 5 is a cross-sectional view taken along line V-V of FIG. 3;
FIG. 6 is a back view of the surroundings of a storage pocket;
FIG. 7 is a plan view of the surroundings of the storage pocket;
FIG. 8 is a perspective view of the surroundings of the storage pocket;
FIG. 9 is a drawing illustrating the front portion of the straddled vehicle from above;
FIG. 10 is an enlarged view of the surroundings of the storage pocket and the surroundings of a seat of FIG. 1; and
FIG. 11 is a drawing illustrating the surroundings of an inner panel from behind.

### DETAILED DESCRIPTION OF THE PREFERRED EMBODIMENTS

In the following, embodiments of a straddled vehicle according to the present invention will be described while referencing the attached drawings. Note that, in the following description, terms indicating direction such as "front-back", "up-down", and "left-right" are based on the viewing direction of the driver when driving the straddled vehicle 100.

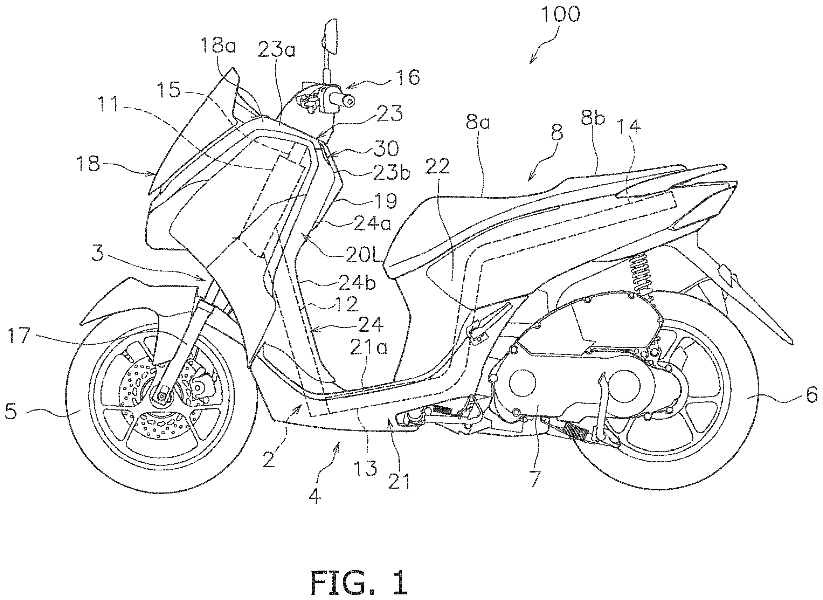

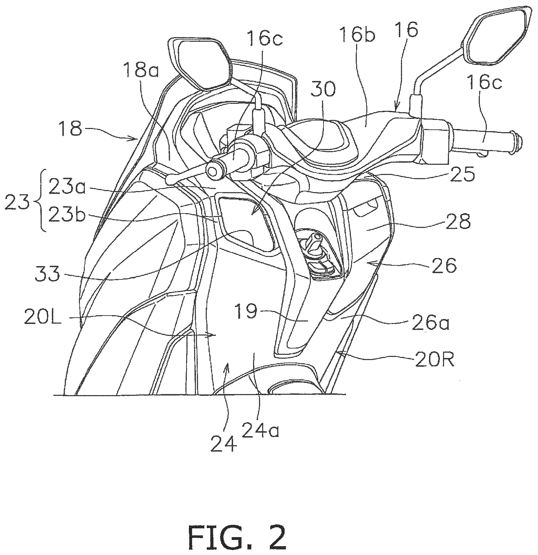

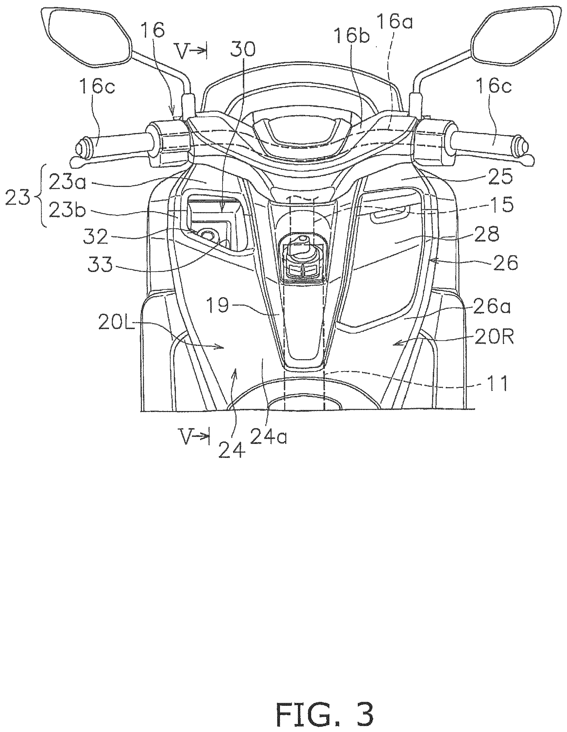

FIG. 1 is a side view of a straddled vehicle 100. FIG. 2 is a perspective view illustrating a front portion of the straddled vehicle 100 from behind. FIG. 3 is a drawing illustrating the front portion of the straddled vehicle 100 from behind. The straddled vehicle 100 is a scooter-type vehicle.

The straddled vehicle 100 includes a body frame 2, a steering device 3, a body cover 4, a front wheel 5, a rear wheel 6, a drive unit 7, and a seat 8 for the driver to sit on.

The body frame 2 includes a head pipe 11, a down frame 12, a lower frame 13, and a rear frame 14.

The head pipe 11 is disposed at the center in a vehicle width direction of the straddled vehicle 100. The down frame 12 extends downward from the head pipe 11. The lower frame 13 extends rearward from a lower portion of the down frame 12. The rear frame 14 extends rearward and upward from a rear portion of the lower frame 13.

The steering device 3 is rotatably supported by the head pipe 11. The steering device 3 includes a steering shaft 15, a handle portion 16, and a suspension 17. The steering shaft 15 extends in the up-down direction and is rotatably supported by the head pipe 11. The handle portion 16 is fixed to an upper portion of the steering shaft 15. The handle portion 16 includes a handlebar 16a, a handle cover 16b, and grip portions 16c. The handlebar 16a extends in the left-right direction and is fixed to an upper portion of the steering shaft 15. The handle cover 16b covers the handlebar 16a. The grip portions 16c are respectively provided on both ends of the handlebar 16a. The suspension 17 is connected to a lower portion of the steering shaft 15. The suspension 17 rotatably supports the front wheel 5.

The body cover 4 includes a front cover 18, a back cover 19, a left leg shield 20L, a right leg shield 20R, a lower cover 21, and a rear cover 22.

The front cover 18 covers the front of the head pipe 11. The back cover 19 covers the rear of the down frame 12 and the head pipe 11. The left leg shield 20L is disposed on the left side of the back cover 19. The left leg shield 20L is disposed behind the front cover 18 and is connected to the front cover 18. Note that, the term "connection" is not limited to direct connections and also encompasses indirect connections. Moreover, the term" connection" is not limited to fixing independent members to each other, but also encompasses a plurality of portions in a single member being continuous.

The left leg shield 20L includes an upper surface portion 23 and a rear surface portion 24. The upper surface portion 23 extends rearward and downward from a rear end portion 18a of the front cover 18. The upper surface portion 23 includes a first upper surface portion 23a and a second upper surface portion 23b. The first upper surface portion 23a extends rearward and downward from the rear end portion 18a of the front cover 18. The second upper surface portion 23b extends rearward and downward from a rear portion of the first upper surface portion 23a at an inclination that is greater than an inclination of the first upper surface portion 23a.

The rear surface portion 24 includes a first rear surface portion 24a and a second rear surface portion 24b. The first rear surface portion 24a extends forward and downward from a rear end portion of the second upper surface portion 23b. The second rear surface portion 24b extends rearward and downward from a lower end portion of the first rear surface portion 24a toward the lower cover 21.

The right leg shield 20R is disposed on the right side of the back cover 19. The right leg shield 20R is disposed behind the front cover 18 and is connected to the front cover 18. An opening/closing type storage box 28 is provided in the right leg shield 20R. The right leg shield 20R includes an upper surface portion 25 and a rear surface portion 26. The upper surface portion 25 extends rearward and downward from a rear end portion 18a of the front cover 18. The rear surface portion 26 includes a first rear surface portion 26a that extends forward and downward from a rear end portion of the upper surface portion 25, and a second rear surface portion (not illustrated in the drawings) that extends rearward and downward from a lower end portion of the first rear surface portion 26a toward the lower cover 21.

The lower cover 21 covers the surroundings of the lower frame 13. The lower cover 21 includes a foot board 21a on which the foot of the driver is placed. The foot board 21a is provided on an upper portion of the lower frame 13. In the present embodiment, the foot board 21a is a flat foot board that has a flat shape. However, the foot board 21a may have a shape in which a center portion in the vehicle width direction protrudes upward. The rear cover 22 covers both the left and right of the rear frame 14.

The drive unit 7 includes a motor such as an engine, for example. The drive unit 7 is disposed below the seat 8.

The seat 8 is disposed more rearward than the left and right leg shields 20L, 20R and above the rear frame 14. The seat 8 extends in the front-back direction and is supported by the rear frame 14. The seat 8 includes a first seat surface 8a on which the driver sits, and a second seat surface 8b on which a passenger sits. The second seat surface 8b is disposed behind the first seat surface 8a and more upward than the first seat surface 8a.

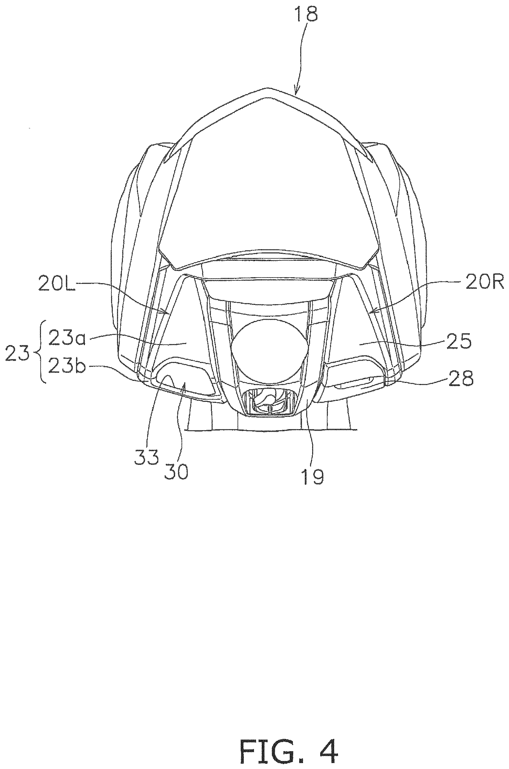

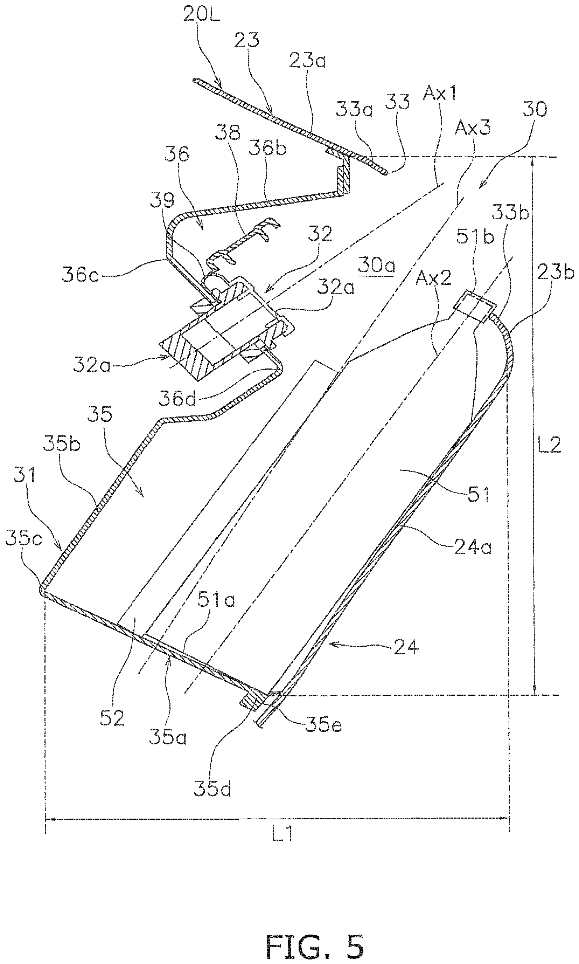

FIG. 4 is a drawing illustrating the front portion of the straddled vehicle 100 from above. Note that the handle portion 16 is not depicted in FIG. 4. FIG. 5 is a cross-sectional view taken along line V-V of FIG. 3. As illustrated in FIGS. 3 to 5, the straddled vehicle 100 further includes a storage pocket 30, an inner panel 31, and a power supply portion 32. The storage pocket 30 is provided on one side of the head pipe 11 in the vehicle width direction. In the present embodiment, the storage pocket 30 is provided on the left side of the head pipe 11 in the vehicle width direction. The storage pocket 30 extends in the vehicle width direction, the vehicle front-back direction, and the vehicle up-down direction. The storage pocket 30 has a length L2 in the vehicle up-down direction that is greater than a length L1 in the vehicle front-back direction. In the storage pocket 30, at least a portion of a storage space 30a in which articles are stored is formed by the first rear surface portion 24a of the left leg shield 20L. In the present embodiment, the back of the storage space 30a is covered by the first rear surface portion 24a of the left leg shield 20L. Note that the storage space 30a is space defined by the upper surface portion 23, the first rear surface portion 24a, and the inner panel 31.

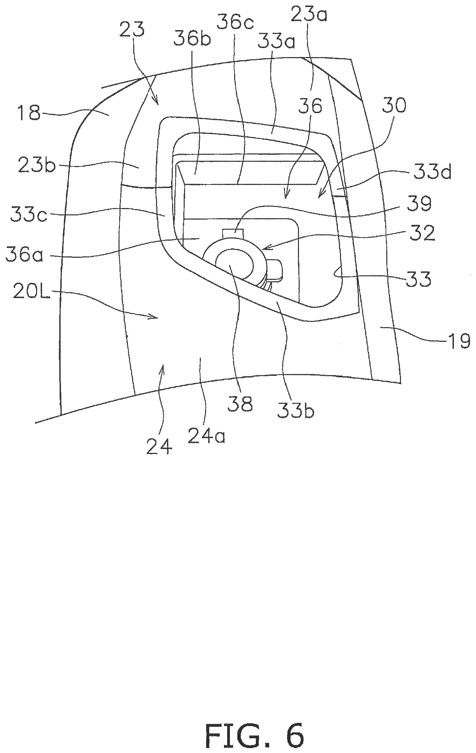

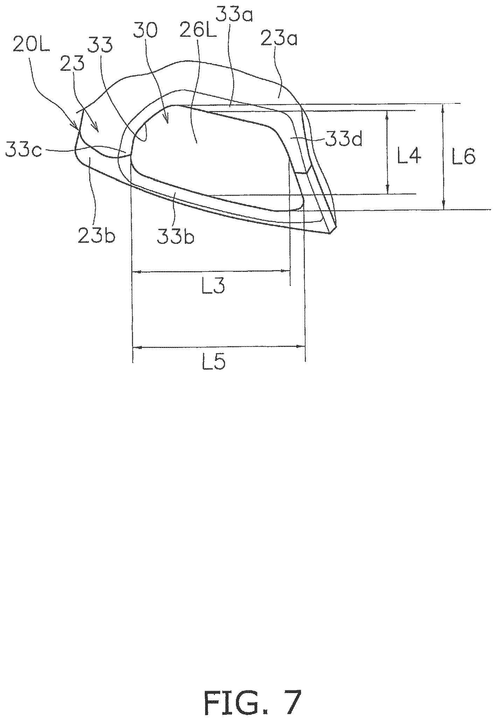

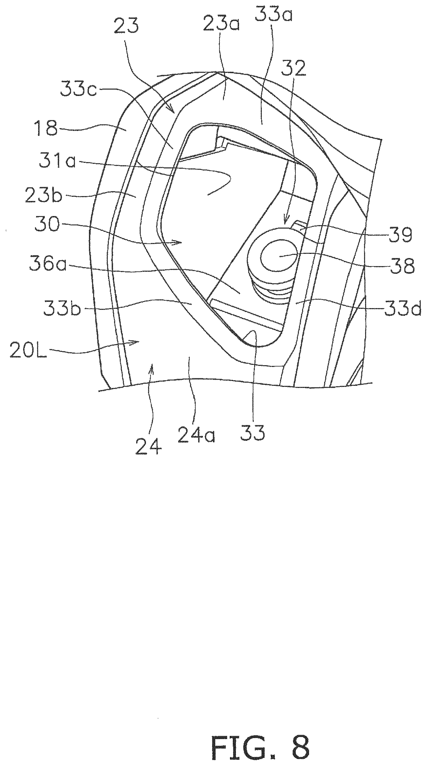

FIG. 6 is a back view of the surroundings of the storage pocket 30. FIG. 7 is a plan view of the surroundings of the storage pocket 30. FIG. 8 is a perspective view of the surroundings of the storage pocket 30. As illustrated in FIGS. 2 to 8, the storage pocket 30 includes an opening 33 through which articles are put in and taken out. The opening 33 is open upward. The opening 33 is provided in the upper surface portion 23 of the left leg shield 20L. In the present embodiment, the opening 33 is formed across the first upper surface portion 23a and the second upper surface portion 23b. However, the opening 33 may be formed only in the second upper surface portion 23b. The opening 33 is disposed more upward than the first seat surface 8a of the seat 8. The opening 33 extends in the vehicle width direction and the vehicle front-back direction.

As illustrated in FIG. 7, the opening 33 has a maximum dimension L3 in the vehicle width direction that is greater than a maximum dimension L4 in the vehicle front-back direction. Additionally, a dimension L5 between a leftmost end of the opening 33 and a rightmost end of the opening 33 is greater than a dimension L6 between an uppermost end of the opening 33 and a lowermost end of the opening 33. The opening 33 is inclined so that a rear portion thereof is positioned lower than a front portion thereof. That is, the opening 33 opens upward and rearward.

As illustrated in FIG. 6, in a vehicle back view, the opening 33 has a roughly rectangular shape, and a peripheral portion and corner portions are chamfered. The opening 33 includes a front edge portion 33a, a rear edge portion 33b, a left edge portion 33c, and a right edge portion 33d. The front edge portion 33a and the rear edge portion 33b extend in the left-right direction and are inclined so that the right side is positioned lower than the left side. The rear edge portion 33b is disposed more rearward than the front edge portion 33a, and has a greater incline than the front edge portion 33a. The left edge portion 33c and the right edge portion 33d extend in the front-back direction and are inclined so that the rear side is positioned lower than the front side. The right edge portion 33d extends longer downward than the left edge portion 33c.

As illustrated in FIGS. 6 and 7, an area (see FIG. 6) of the opening 33 of the storage pocket 30 in the vehicle back view is greater than an area (see FIG. 7) of the opening 33 of the storage pocket 30 in the vehicle plan view. Note that the phrase "area of the opening 33" means the area of the portion of the opening 33 excluding the front edge portion 33a, the rear edge portion 33b, the left edge portion 33c, and the right edge portion 33d.

The storage pocket 30 does not include a lid member for opening/closing the opening 33. Accordingly, the opening 33 is always open. As such, the storage pocket 30 can also store articles that partially protrude from the opening 33.

As illustrated in FIG. 6, in the vehicle back view, the opening 33 overlaps with at least a portion of the power supply portion 32. In the present embodiment, in the vehicle plan view, the opening 33 overlaps with a portion of the power supply portion 32. Specifically, the power supply portion 32 is disposed at a position that is visible through the opening 33 in the vehicle plan view. Note that, the opening 33 may overlap an entirety of the power supply portion 32 in the vehicle back view.

As illustrated in FIGS. 5 and 7, the opening 33 does not overlap the power supply portion 32 in the vehicle plan view. The front edge portion 33a of the opening 33 is positioned more rearward than the power supply portion 32. That is, the power supply portion 32 is disposed at a position that is not visible through the opening 33 in the vehicle plan view.

As illustrated in FIG. 5, the upper surface portion 23 of the left leg shield 20L on the edge portion of the opening 33 overlaps with a portion of the storage space 30a of the storage pocket 30 in the vehicle plan view. That is, the front edge portion 33a, the rear edge portion 33b, the left edge portion 33c, and the right edge portion 33d of the opening 33 overlap with a portion of the storage space 30a of the storage pocket 30. As such, a portion of the upper surface portion 23 serves as an eave that limits the range where rainwater falls directly into the storage space 30a. Moreover, the articles stored in the storage pocket 30 can be prevented from falling out of the storage pocket 30.

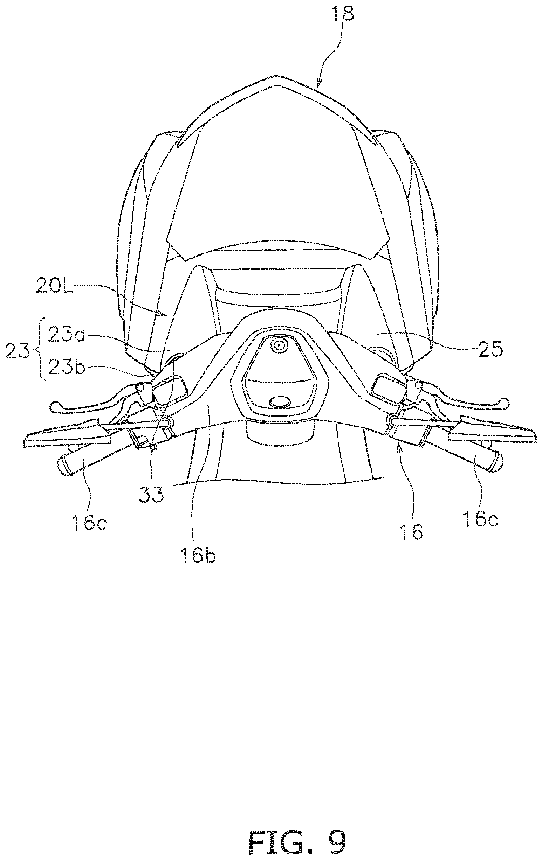

FIG. 9 is a drawing illustrating the front portion of the straddled vehicle 100 from above. As illustrated in FIGS. 1 and 9, the handle portion 16 is positioned more upward than the storage pocket 30. In the present embodiment, the handle portion 16 is positioned above the opening 33. The handle portion 16 overlaps with the opening 33 in the vehicle plan view. Specifically, the handle cover 16b of the handle portion 16 overlaps with at least a portion of the opening 33 in the vehicle plan view. As such, the handle portion 16 can prevent rainwater from directly falling through the opening 33 and into the storage space 30a.

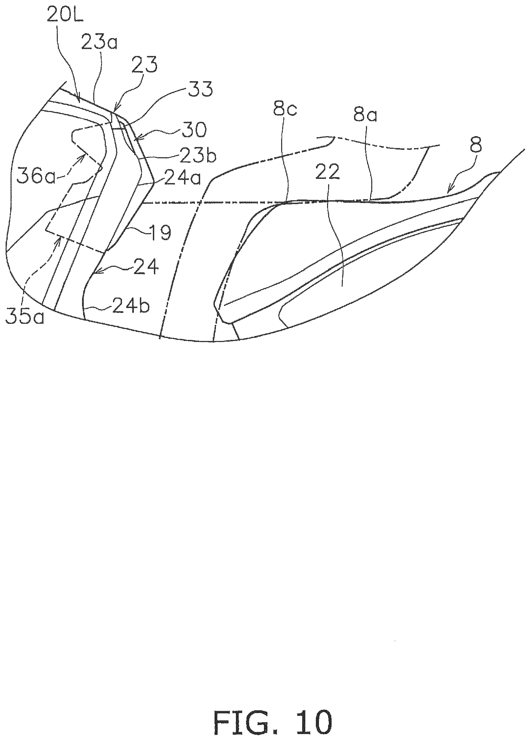

FIG. 10 is an enlarged view of the surroundings of the storage pocket 30 and the surroundings of the seat 8 of FIG. 1. Note that the head pipe 11 and the handle portion 16 are not depicted in FIG. 10. Additionally, in FIG. 10, the position of the legs of the driver, when the driver is seated on the first seat surface 8a of the seat 8, is depicted. As illustrated in FIG. 10, the opening 33 is positioned more upward than the front end portion 8c of the first seat surface 8a of the seat 8.

As illustrated in FIG. 5, the storage pocket 30 preferably includes a first storage portion 35 and a second storage portion 36. The first storage portion 35 extends in the vehicle width direction, the vehicle front-back direction, and the vehicle up-down direction. The first storage portion 35 is capable of storing a beverage container 51, a mobile information terminal 52, or the like. The beverage container 51 is, for example, a cylindrical plastic bottle. The mobile information terminal 52 is, for example, a thin smartphone.

The first storage portion 35 includes a first bottom portion 35a and a first connection portion 35b. The first bottom portion 35a is the bottom surface of the first storage portion 35. The first bottom portion 35a extends in the vehicle width direction and the vehicle front-back direction. The first bottom portion 35a is inclined rearward and downward so that the rear end portion 35d is positioned lower than the front end portion 35c. As such, as illustrated in FIG. 5, the articles stored in the first storage portion 35 are stored in a state inclined in a direction approaching the first rear surface portion 24a of the left leg shield 20L. For example, in FIG. 5, the beverage container 51 is stored in the first storage portion 35 in a state supported by the first rear surface portion 24a of the left leg shield 20L.

As illustrated in FIG. 7, the first bottom portion 35a does not overlap the opening 33 in the vehicle plan view. That is, the first bottom portion 35a is positioned more forward than the opening 33. As illustrated in FIG. 5, the first bottom portion 35a overlaps with the first upper surface portion 23a in the vehicle plan view. The rear end portion 35d of the first bottom portion 35a is positioned more forward than the opening 33. Additionally, as illustrated in FIG. 10, the first bottom portion 35a is positioned more downward than the front end portion 8c of the first seat surface 8a of the seat 8.

The first bottom portion 35a includes a water drain hole 35e. The water drain hole 35e is provided in the rear end portion 35d of the first bottom portion 35a. In the present embodiment, the water drain hole 35e is configured from a gap provided between the rear end portion 35d of the first bottom portion 35a and the first rear surface portion 24a of the left leg shield 20L.

The first connection portion 35b connects the front end portion 35c of the first bottom portion 35a of the first storage portion 35 to a rear end portion 36d (described later) of a second bottom portion 36a of the second storage portion 36. The first connection portion 35b extends upward and rearward from the front end portion 35c of the first bottom portion 35a of the first storage portion 35.

The second storage portion 36 extends in the vehicle width direction, the vehicle front-back direction, and the vehicle up-down direction. The second storage portion 36 is continuous with the first storage portion 35. The second storage portion 36 includes a second bottom portion 36a and a second connection portion 36b. The second bottom portion 36a is disposed more upward than the first bottom portion 35a. The second bottom portion 36a is the bottom surface of the second storage portion 36. The second bottom portion 36a is inclined rearward and downward so that the rear end portion 36d is positioned lower than the front end portion 36c. Additionally, as illustrated in FIG. 10, the second bottom portion 36a is positioned more upward than the front end portion 8c of the first seat surface 8a of the seat 8.

As illustrated in FIGS. 5 and 7, in the vehicle plan view, the second bottom portion 36a overlaps with the first upper surface portion 23a and the first bottom portion 35a of the left leg shield 20L. Specifically, the front end portion 36c of the second bottom portion 36a and the rear end portion 36d of the second bottom portion 36a are positioned more rearward than the front end portion 35c of the first bottom portion 35a. The front end portion 36c of the second bottom portion 36a is positioned more forward than the rear end portion 35d of the first bottom portion 35a. In the vehicle plan view, the rear end portion 36d of the second bottom portion 36a overlaps with the rear end portion 35d of the first bottom portion 35a. The rear end portion 36d of the second bottom portion 36a reduces movement in the front-back direction of the articles stored in the first storage portion 35. Note that, the rear end portion 36d of the second bottom portion 36a may be positioned more forward or more rearward than the rear end portion 36d of the first bottom portion 35a. Moreover, the front end portion 36c of the second bottom portion 36a may be disposed more forward than the front end portion 35c of the first bottom portion 35a.

As illustrated in FIGS. 5 and 6, in the vehicle back view, the front end portion 36c of the second bottom portion 36a overlaps with the opening 33. In the vehicle back view, the rear end portion 36d of the second bottom portion 36a overlaps with the first rear surface portion 24a of the left leg shield 20L.

The second connection portion 36b connects the front end portion 36c of the second bottom portion 36a to the upper surface portion 23 of the left leg shield 20L. The second connection portion 36b extends rearward and upward from the front end portion 36c of the second bottom portion 36a. The second connection portion 36b is disposed more forward than the opening 33 and, in the vehicle back view, overlaps with the opening 33. In the vehicle plan view, the second connection portion 36b overlaps with the first upper surface portion 23a and the second bottom portion 36a of the left leg shield 20L. The second connection portion 36b extends more rearward than the rear end portion 36d of the second bottom portion 36a.

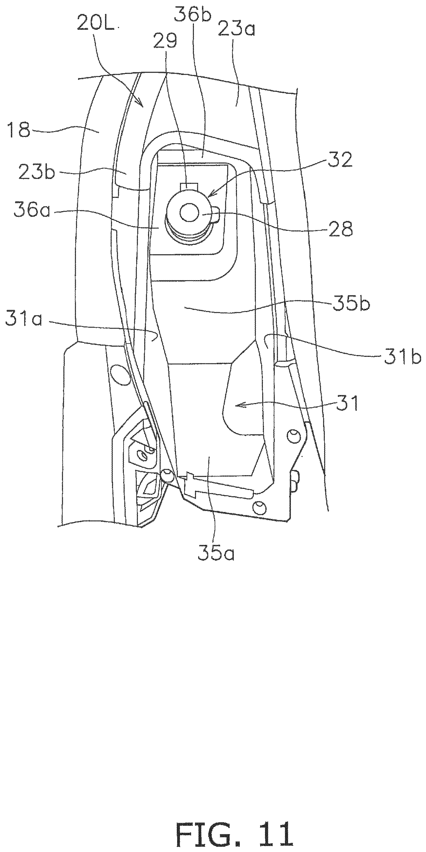

FIG. 11 is a drawing illustrating the surroundings of the inner panel 31 from behind. In FIG. 11, the rear surface portion 24 of the left leg shield 20L is removed. The inner panel 31 is a boxlike member that is open to the rear. The inner panel 31 is disposed in front of the first rear surface portion 24a of the left leg shield 20L. The storage space 30a of the storage pocket 30 is defined between the inner panel 31 and the left leg shield 20L. In the present embodiment, the storage space 30a of the storage pocket 30 is defined between the inner panel 31 and the first rear surface portion 24a of the left leg shield 20L. Accordingly, in the present embodiment, the first bottom portion 35a, the first connection portion 35b, the second bottom portion 36a, and the second connection portion 36b are configured by the inner panel 31.

As illustrated in FIG. 11, the inner panel 31 includes a left side wall 31a and a right side wall 31b. The left side wall 31a and the right side wall 31b are disposed so as to face each other in the left-right direction. The left side wall 31a and the right side wall 31b extend upward and rearward from the first bottom portion 35a, and rear portions of the left side wall 31a and the right side wall 31b are connected to the first rear surface portion 24a of the left leg shield 20L.

The inner panel 31 is fixed to the front cover 18 or the left leg shield 20L. In the present embodiment, the inner panel 31 is fixed to the left leg shield 20L by a plurality of fixing members (not illustrated in the drawings). Note that the inner panel 31 may be fixed to both the front cover 18 and the left leg shield 20L.

As illustrated in FIGS. 5 and 11, the first storage portion 35 is provided between the left side wall 31a and the right side wall 31b, between the first connection portion 35b and the first rear surface portion 24a of the left leg shield 20L, and between the first bottom portion 35a and the opening 33. Meanwhile, the second storage portion 36 is provided between the left side wall 31a and the right side wall 31b, and between the second bottom portion 36a, the second connection portion 36b, and the opening 33.

The power supply portion 32 is a power socket implemented as an accessory socket. As illustrated in FIGS. 5 and 6, the power supply portion 32 is disposed in the storage pocket 30. The power supply portion 32 is disposed more forward than the opening 33. Specifically, at least a portion of the power supply portion 32 is positioned more forward than the front edge portion 33a of the opening 33. In the vehicle back view, at least a portion of the power supply portion 32 overlaps with the rear edge portion 33b of the opening 33. In the vehicle back view, the power supply portion 32 is disposed at a position nearer to the left edge portion 33c of the opening 33 than to the right edge portion 33d of the opening 33. In the vehicle plan view, at least a portion of the power supply portion 32 overlaps with the first upper surface portion 23a and the second connection portion 36b. The power supply portion 32 is disposed in the second bottom portion 36a of the second storage portion 36. An upper portion of the power supply portion 32 protrudes from the second bottom portion 36a of the second storage portion 36. The power supply portion 32 is more easily accessed as a result disposing the power supply portion 32 in the second bottom portion 36a, which is more upward than the first bottom portion 35a.

The power supply portion 32 includes a mounting hole 32a in which a charging device of a mobile information terminal or the like can be detachably mounted. The mounting hole 32a is open upward and rearward. An axis Ax1 of the power supply portion 32 passes through the center of the mounting hole 32a. The axis Ax1 of the power supply portion 32 passes through the opening 33 of the storage pocket 30. The axis Ax1 of the power supply portion 32 passes through a position nearer to the front edge portion 33a of the opening 33 than to the rear edge portion 33b of the opening 33. For example, a distance from the axis Ax1 of the power supply portion 32 to the front edge portion 33a of the opening 33 is less than a distance from the axis Ax1 of the power supply portion 32 to the rear edge portion 33b of the opening 33. Additionally, the axis Ax1 of the power supply portion 32 passes through a position nearer to the left edge portion 33c of the opening 33 than to the right edge portion 33d of the opening 33. An angle of inclination of the axis Ax1 of the power supply portion 32 with respect to the horizontal direction is less than an angle of inclination of the first rear surface portion 24a of the left leg shield 20L with respect to the horizontal direction. The power supply portion 32 is more easily accessed as a result of the axis Ax1 of the power supply portion 32 passing through the opening 33. Additionally, since the charging device can easily be mounted in the mounting hole 32a, the mobile information terminal 52 can easily be connected to the charging device.

As described above, the articles stored in the first storage portion 35 are stored in a state inclined in a direction approaching the first rear surface portion 24a of the left leg shield 20L. As a result, when the beverage container 51 is stored in the first storage portion 35 as illustrated in FIG. 5, the axis Ax1 of the power supply portion 32 does not intersect with an axis Ax2 of the beverage container 51 within the storage space 30a. The axis Ax2 of the beverage container 51 extends from a bottom portion 51a of the beverage container 51 toward an opening 51b provided in an upper portion of the beverage container 51. The opening 51b is, for example, an opening for filling the beverage container 51 with a beverage. The axis Ax1 of the power supply portion 32 intersects with the axis Ax2 of the beverage container 51 outside the storage space 30a. As such, depending on the size and the shape of the beverage container 51 stored in the first storage portion 35, the power supply portion 32 can be accessed without removing the beverage container 51 from the storage pocket 30. Moreover, when removing the beverage container 51 from the storage pocket 30, the power supply portion 32 or the charging device mounted in the mounting hole 32a of the power supply portion 32 is less likely to interfere with the beverage container 51. Note that the axis Ax1 of the power supply portion 32 need not necessarily intersect with the axis Ax2 of the beverage container 51 outside the storage space 30a.

When the handlebar 16a of the handle portion 16 is at a position along the vehicle width direction, the axis Ax1 of the power supply portion 32 does not intersect the handle cover 16b of the handle portion 16. Additionally, when the handlebar 16a of the handle portion 16 is at a position along the vehicle width direction, the axis Ax2 of the beverage container 51 does not intersect the handle cover 16b of the handle portion 16. As such, it is easier to access the power supply portion 32 and it is easier to put in or take out beverage containers from the storage pocket 30. Note that the handle portion 16 in FIGS. 1, 3, and 9 is illustrated at the position along the vehicle width direction.

The axis Ax1 of the power supply portion 32 does not intersect a center axis Ax3 of the first storage portion 35 within the storage space 30a. The axis Ax1 of the power supply portion 32 intersects with the center axis Ax3 of the first storage portion 35 outside the storage space 30a. In the present embodiment, the center axis Ax3 of the first storage portion 35 passes through the center of the first bottom portion 35a of the first storage portion 35, and also extends substantially parallel to the first rear surface portion 24a of the left leg shield 20L. Note that the axis Ax1 of the power supply portion 32 intersects with the center axis Ax3 of the first storage portion 35 outside the storage space 30a. However, the axis Ax1 of the power supply portion 32 need not necessarily intersect with the center axis Ax3 of the first storage portion 35 outside the storage space 30a.

As illustrated in FIG. 5, a cap member 38 that closes the mounting hole 32a is detachably mounted on the mounting hole 32a. That is, the mounting hole 32a is opened/closed by the cap member 38. Note that, FIG. 5 depicts a state in which the cap member 38 is removed from the mounting hole 32a. The cap member 38 is prevented from falling from the straddled vehicle 100 by a linking portion 39 that links the cap member 38 to the power supply portion 32.

With the straddled vehicle 100 according to the embodiment described above, the opening 33 of the storage pocket 30 is open upward and a lid is not provided on the storage pocket 30. As such, elongated articles such as the beverage container 51 can be easily put in and taken out. Furthermore, the length of the storage pocket 30 in the vehicle up-down direction is greater than the length of the storage pocket 30 in the vehicle front-back direction. As such, it is easier to store elongated articles such as the beverage container 51 in the storage pocket 30. Moreover, as illustrated in FIG. 10, the opening 33 of the storage pocket 30 is positioned more upward than the front end portion 8c of the first seat surface 8a of the seat 8. As such, when putting in or taking out articles from the storage pocket 30, interference between the legs of the driver and the articles can be reduced.

Additionally, the back of the storage space 30a of the storage pocket 30 is covered by the first rear surface portion 24a of the left leg shield 20L. Therefore, when putting in and taking out articles from the storage pocket 30, the legs of the driver are less likely to interfere with the articles than in cases in which the storage pocket is disposed in the rear portion of the leg shield, for example. Furthermore, the design of the straddled vehicle can be improved.

The axis Ax1 of the power supply portion 32 passes through the opening 33 and, also, in the vehicle back view, the opening 33 of the storage pocket 30 is provided at a position that overlaps with the power supply portion 32. As such, the power supply portion 32 can be easily accessed, even when the power supply portion 32 is disposed within the storage pocket 30. Furthermore, in the vehicle plan view, the opening 33 of the storage pocket 30 is provided at a position that does not overlap with the power supply portion 32. As such, rainwater can be prevented from directly falling on the power supply portion 32.

For example, in the embodiment described above, an example of a scooter-type straddled vehicle was described. However, the present invention may be applied to other straddled vehicles such as mopeds and the like. Additionally, the configurations and shapes of the body frame 2 and the body cover 4 are not limited to the embodiment described above. Moreover, the shape and the like of the storage pocket 30 is not limited to the embodiment described above.

The power supply portion 32 may be another type of connector such as a USB port.

In the embodiment described above, a portion of the storage space 30a of the storage pocket 30 is defined by the inner panel 31, but the storage space 30a of the storage pocket 30 may be defined by other members.

The storage pocket 30 may be provided on the right side of the head pipe 11 in the vehicle width direction.

### INDUSTRIAL APPLICABILITY

According to the present invention, it is easier to put in or take out elongated articles, such as plastic bottles, from a storage pocket of a straddled vehicle, and it is also easier to pull a wire out from the power supply portion.

### REFERENCE NUMERALS

- 8: Seat
- 8a: First seat surface
- 11: Head pipe
- 15: Steering shaft
- 16: Handle portion
- 16a: Handlebar
- 16b: Handle cover
- 18: Front cover
- 20L: Left leg shield
- 23: Upper surface portion
- 24a: First rear surface portion
- 30: Storage pocket
- 30a: Storage space
- 31: Inner panel
- 32: Power supply portion
- 33: Opening
- 35: First storage portion
- 35a: First bottom portion
- 35b: First connection portion
- 35e: Water drain hole
- 36: Second storage portion
- 36a: Second bottom portion
- 100: Straddled vehicle
- Ax 1: Axis of power supply portion

## Claims

1. A straddled vehicle (100), comprising:
a head pipe (11);
a front cover (18) covering a front of the head pipe (11);
a steering shaft (15) rotatably supported by the head pipe (11);
a handle portion (16) including a handlebar (16a) fixed to the steering shaft (15) , and a handle cover (16b) covering the handlebar (16a);
a leg shield (20L, 20R) provided extending in an up-down direction behind the front cover (18), the leg shield (20L, 20R) including an upper surface portion (23) extending rearward and downward from a rear end portion (18a) of the front cover (18), and a rear surface portion (24) extending forward and downward from the upper surface portion (23);
a seat (8) for a driver to sit, the seat (8) being disposed more rearward than the leg shield (20L, 20R);
a lid-less storage pocket (30) provided on one side in a vehicle width direction of the head pipe (11), the storage pocket (30) including an opening (33) provided in the upper surface portion (23) of the leg shield (20L, 20R) and being open upward for putting in or taking out an article;
the storage pocket (30) having a length in a vehicle up-down direction that is greater than a length in a vehicle front-back direction, and
an area of the opening (33) of the storage pocket (30) in the vehicle back view being greater than an area of the opening (33) of the storage pocket (30) in the vehicle plan view,
wherein the straddled vehicle (100) further comprises:
a power supply portion (32) disposed in the storage pocket (30) more forward of the opening (33), a charging device being detachable from the power supply portion (32), an axis of the power supply portion (32) passing through the opening (33) of the storage pocket (30), wherein
in a vehicle plan view, at least a portion of the opening (33) of the storage pocket (30) overlaps the handle cover (16b),
in a vehicle side view, the opening (33) of the storage pocket (30) is disposed more upward than a front end portion (8c) of a seat surface (8a) of the seat (8), overlapping the power supply portion (32) in a vehicle back view, and not overlapping the power supply portion (32) in the vehicle plan view.

2. A straddled vehicle (100) according to claim 1, wherein:
the storage pocket (30) includes
a first storage portion (35) including a first bottom portion (35a), and
a second storage portion (36) including a second bottom portion (36a) that is disposed more upward than the first bottom portion (35a), wherein
the power supply portion (32) is disposed in the second bottom portion (36a) of the second storage portion (36).

3. A straddled vehicle according to claim 2, wherein the second bottom portion (36a) of the second storage portion (36) is inclined rearward and downward.

4. A straddled vehicle (100) according to claim 2 or 3, wherein the first bottom portion (35a) of the first storage portion (35) is inclined rearward and downward.

5. A straddled vehicle (100) according to any one of claims 2 to 4, wherein:
the first storage portion (35) of the storage pocket (30) further includes a connection portion (35b) that connects a front end portion of the first bottom portion (35a) of the first storage portion (35) to a rear end portion of the second bottom portion (36a) of the second storage portion (36), and
the rear end portion of the second bottom portion (36a) of the second storage portion (36) is positioned more rearward than the front end portion of the first bottom portion (35a) of the first storage portion (35).

6. A straddled vehicle (100) according to any one of claims 2 to 5, wherein the first bottom portion (35a) of the first storage portion (35) includes a water drain hole (35e).

7. A straddled vehicle (100) according to any one of claims 2 to 6, wherein the first bottom portion (35a) of the first storage portion (35) of the storage pocket (30) is positioned lower than the front end portion (8c) of the seat surface (8a) of the seat (8).

8. A straddled vehicle (100) according to any one of claims 1 to 7, wherein the opening (33) of the storage pocket (30) has a maximum dimension in the vehicle width direction that is greater than a maximum dimension in the vehicle front-back direction.

9. A straddled vehicle (100) according to any one of claims 1 to 8, wherein the rear surface portion (24) of the leg shield (20L, 20R) forms at least a portion of a storage space (30a) of the storage pocket (30).

10. A straddled vehicle (100) according to any one of claims 1 to 8, further comprising: an inner panel fixed to the front cover (18) or the leg shield (20L, 20R), wherein a storage space (30a) of the storage pocket (30) is defined between the leg shield (20L, 20R) and the inner panel.

11. A straddled vehicle according to any one of claims 1 to 8, wherein in the vehicle plan view, the upper surface portion (23) of the leg shield (20L, 20R) on a peripheral portion of the opening (33) of the storage pocket (30) overlaps with a portion of a storage space (30a) of the storage pocket (30).

12. A straddled vehicle (100) according to any one of claims 1 to 11, wherein:
the storage pocket (30) is capable of storing a beverage container (51), and
when the handle portion (16) is at a position along the vehicle width direction, an axis of the beverage container (51) stored in the storage pocket (30) does not intersect the handle cover (16b) of the handle portion (16).

## Patentansprüche

1. Gespreiztes Fahrzeug (100), umfassend:
ein Kopfrohr (11);
eine vordere Abdeckung (18), die eine Vorderseite des Kopfrohrs (11) abdeckt;
eine Lenkwelle (15), die drehbar von dem Kopfrohr (11) getragen wird;
einen Griffabschnitt (16) mit einer an der Lenkwelle (15) befestigten Griffstange (16a) und einer die Griffstange (16a) abdeckenden Griffabdeckung (16b);
eine Beinabdeckung (20L, 20R), die sich in einer Aufwärts-/Abwärtsrichtung hinter der vorderen Abdeckung (18) erstreckt, wobei die Beinabdeckung (20L, 20R) einen oberen Flächenabschnitt (23), der sich von einem hinteren Endabschnitt (18a) der vorderen Abdeckung (18) nach hinten und nach unten erstreckt, und einen hinteren Flächenabschnitt (24), der sich von dem oberen Flächenabschnitt (23) nach vorne und nach unten erstreckt, aufweist;
einen Sitz (8) zum Sitzen eines Fahrers, wobei der Sitz (8) weiter hinten angeordnet ist als die Beinabdeckung (20L, 20R);
eine deckellose Aufbewahrungstasche (30), die auf einer Seite in einer Fahrzeugbreitenrichtung des Kopfrohrs (11) vorgesehen ist, wobei die Aufbewahrungstasche (30) eine Öffnung (33) aufweist, die in dem oberen Flächenabschnitt (23) der Beinabdeckung (20L, 20R) vorgesehen ist und nach oben offen ist, um einen Gegenstand hineinzulegen oder herauszunehmen;
die Aufbewahrungstasche (30) eine Länge in einer Aufwärts-/Abwärtsrichtung des Fahrzeugs hat, die größer ist als eine Länge in einer Fahrzeuglängsrichtung, und
eine Fläche der Öffnung (33) der Aufbewahrungstasche (30) in der Fahrzeugrückansicht größer ist als eine Fläche der Öffnung (33) der Aufbewahrungstasche (30) in der Fahrzeugdraufsicht,
wobei das gespreizte Fahrzeug (100) ferner umfasst:
einen Stromversorgungsabschnitt (32), der in der Aufbewahrungstasche (30) weiter vor der Öffnung (33) angeordnet ist, wobei eine Ladevorrichtung von dem Stromversorgungsabschnitt (32) abnehmbar ist, wobei eine Achse des Stromversorgungsabschnitts (32) durch die Öffnung (33) der Aufbewahrungstasche (30) verläuft, wobei
in der Fahrzeugdraufsicht zumindest ein Teil der Öffnung (33) der Aufbewahrungstasche (30) die Griffabdeckung (16b) überlappt,
in einer Fahrzeugseitenansicht die Öffnung (33) der Aufbewahrungstasche (30) weiter oben als ein vorderer Endabschnitt (8c) einer Sitzfläche (8a) des Sitzes (8) angeordnet ist, diese den Stromversorgungsabschnitt (32) in einer Fahrzeugrückansicht überlappt und den Stromversorgungsabschnitt (32) in der Fahrzeugdraufsicht nicht überlappt.

2. Gespreiztes Fahrzeug (100) nach Anspruch 1, wobei die Aufbewahrungstasche (30) umfasst:
einen ersten Aufbewahrungsabschnitt (35) mit einem ersten Bodenabschnitt (35a) und
einen zweiten Aufbewahrungsabschnitt (36) mit einem zweiten Bodenabschnitt (36a), der weiter oben als der erste Bodenabschnitt (35a) angeordnet ist, wobei
der Stromversorgungsabschnitt (32) in dem zweiten Bodenabschnitt (36a) des zweiten Aufbewahrungsabschnitts (36) angeordnet ist.

3. Gespreiztes Fahrzeug nach Anspruch 2, wobei der zweite Bodenabschnitt (36a) des zweiten Aufbewahrungsabschnitts (36) nach hinten und nach unten geneigt ist.

4. Gespreiztes Fahrzeug (100) nach Anspruch 2 oder 3, wobei der erste Bodenabschnitt (35a) des ersten Aufbewahrungsabschnitts (35) nach hinten und unten geneigt ist.

5. Gespreiztes Fahrzeug (100) nach einem der Ansprüche 2 bis 4, wobei
der erste Aufbewahrungsabschnitt (35) der Aufbewahrungstasche (30) ferner einen Verbindungsbereich (35b) aufweist, der einen vorderen Endbereich des ersten Bodenabschnitts (35a) des ersten Aufbewahrungsabschnitts (35) mit einem hinteren Endbereich des zweiten Bodenabschnitts (36a) des zweiten Aufbewahrungsabschnitts (36) verbindet, und
der hintere Endabschnitt des zweiten Bodenabschnitts (36a) des zweiten Aufbewahrungsabschnitts (36) weiter hinten angeordnet ist als der vordere Endabschnitt des ersten Bodenabschnitts (35a) des ersten Aufbewahrungsabschnitts (35).

6. Gespreiztes Fahrzeug (100) nach einem der Ansprüche 2 bis 5, wobei der erste Bodenabschnitt (35a) des ersten Aufbewahrungsabschnitts (35) eine Wasserablauföffnung (35e) aufweist.

7. Gespreiztes Fahrzeug (100) nach einem der Ansprüche 2 bis 6, wobei der erste Bodenabschnitt (35a) des ersten Aufbewahrungsabschnitts (35) der Aufbewahrungstasche (30) niedriger als der vordere Endabschnitt (8c) der Sitzfläche (8a) des Sitzes (8) angeordnet ist.

8. Gespreiztes Fahrzeug (100) nach einem der Ansprüche 1 bis 7, wobei die Öffnung (33) der Aufbewahrungstasche (30) eine maximale Abmessung in der Fahrzeugbreitenrichtung aufweist, die größer ist als eine maximale Abmessung in der Fahrzeuglängsrichtung.

9. Gespreiztes Fahrzeug (100) nach einem der Ansprüche 1 bis 8, wobei der hintere Flächenabschnitt (24) der Beinabdeckung (20L, 20R) zumindest einen Teil eines Stauraums (30a) der Aufbewahrungstasche (30) bildet.

10. Gespreiztes Fahrzeug (100) nach einem der Ansprüche 1 bis 8, das ferner eine an der vorderen Abdeckung (18) oder der Beinabdeckung (20L, 20R) befestigte Innenplatte umfasst, wobei ein Stauraum (30a) der Aufbewahrungstasche (30) zwischen der Beinabdeckung (20L, 20R) und der Innenplatte definiert ist.

11. Gespreiztes Fahrzeug nach einem der Ansprüche 1 bis 8, wobei in der Draufsicht auf das Fahrzeug der obere Flächenabschnitt (23) der Beinabdeckung (20L, 20R) an einem Umfangsabschnitt der Öffnung (33) der Aufbewahrungstasche (30) mit einem Abschnitt eines Stauraums (30a) der Aufbewahrungstasche (30) überlappt.

12. Gespreiztes Fahrzeug (100) nach einem der Ansprüche 1 bis 11, wobei
die Aufbewahrungstasche (30) in der Lage ist, einen Getränkebehälter (51) aufzunehmen, und
wenn sich der Griffabschnitt (16) in einer Position entlang der Fahrzeugbreitenrichtung befindet, eine Achse des in der Aufbewahrungstasche (30) aufbewahrten Getränkebehälters (51) die Griffabdeckung (16b) des Griffabschnitts (16) nicht schneidet.

## Revendications

1. Véhicule à selle (100), comprenant :
un tuyau de tête (11) ;
un couvercle avant (18) couvrant une partie avant du tuyau de tête (11) ;
un arbre de direction (15) supporté en rotation par le tuyau de tête (11) ;
une partie de poignée (16) comprenant un guidon (16a) fixé à l'arbre de direction (15) et un couvercle de poignée (16b) couvrant le guidon (16a) ;
un protège-jambes (20L, 20R) prévu de manière à s'étendre dans une direction haut-bas derrière le couvercle avant (18), le protège-jambes (20L, 20R) comprenant une partie de surface supérieure (23) s'étendant vers l'arrière et vers le bas à partir d'une partie d'extrémité arrière (18a) du couvercle avant (18), et une partie de surface arrière (24) s'étendant vers l'avant et vers le bas à partir de la partie de surface supérieure (23) ;
un siège (8) pour qu'un conducteur puisse s'asseoir, le siège (8) étant disposé plus en arrière que le protège-jambes (20L, 20R) ;
une poche de stockage sans couvercle (30) prévue sur un côté dans une direction de largeur de véhicule du tuyau de tête (11), la poche de stockage (30) comprenant une ouverture (33) prévue dans la partie de surface supérieure (23) du protège-jambes (20L, 20R) et étant ouverte vers le haut pour insérer ou retirer un article ;
la poche de stockage (30) ayant une longueur dans une direction haut-bas du véhicule qui est supérieure à une longueur dans une direction avant-arrière du véhicule, et
une superficie de l'ouverture (33) de la poche de stockage (30) dans la vue arrière du véhicule étant supérieure à une superficie de l'ouverture (33) de la poche de stockage (30) dans la vue en plan du véhicule,
dans lequel le véhicule à selle (100) comprend en outre :
une partie d'alimentation électrique (32) disposée dans la poche de stockage (30) plus en avant de l'ouverture (33),
un dispositif de charge qui est détachable de la partie d'alimentation électrique (32), un axe de la partie d'alimentation électrique (32) passant par l'ouverture (33) de la poche de stockage (30), où
dans une vue en plan du véhicule, au moins une partie de l'ouverture (33) de la poche de stockage (30) chevauche le couvercle de poignée (16b),
dans une vue latérale du véhicule, l'ouverture (33) de la poche de stockage (30) est disposée plus vers le haut qu'une partie d'extrémité avant (8c) d'une surface d'assise (8a) du siège (8), chevauchant la partie d'alimentation électrique (32) dans une vue arrière du véhicule, et ne chevauchant pas la partie d'alimentation électrique (32) dans la vue en plan du véhicule.

2. Véhicule à selle (100) selon la revendication 1, dans lequel :
la poche de stockage (30) comprend
une première partie de stockage (35) comprenant une première partie inférieure (35a), et
une deuxième partie de stockage (36) comprenant une deuxième partie inférieure (36a) qui est disposée plus vers le haut que la première partie inférieure (35a), où
la partie d'alimentation électrique (32) est disposée dans la deuxième partie inférieure (36a) de la deuxième partie de stockage (36).

3. Véhicule à selle selon la revendication 2, dans lequel la deuxième partie inférieure (36a) de la deuxième partie de stockage (36) est inclinée vers l'arrière et vers le bas.

4. Véhicule à selle (100) selon la revendication 2 ou 3, dans lequel la première partie inférieure (35a) de la première partie de stockage (35) est inclinée vers l'arrière et vers le bas.

5. Véhicule à selle (100) selon l'une quelconque des revendications 2 à 4, dans lequel :
la première partie de stockage (35) de la poche de stockage (30) comprend en outre une partie de liaison (35b) qui relie une partie d'extrémité avant de la première partie inférieure (35a) de la première partie de stockage (35) à une partie d'extrémité arrière de la deuxième partie inférieure (36a) de la deuxième partie de stockage (36), et
la partie d'extrémité arrière de la deuxième partie inférieure (36a) de la deuxième partie de stockage (36) est positionnée plus en arrière que la partie d'extrémité avant de la première partie inférieure (35a) de la première partie de stockage (35).

6. Véhicule à selle (100) selon l'une quelconque des revendications 2 à 5, dans lequel la première partie inférieure (35a) de la première partie de stockage (35) comprend un trou d'évacuation d'eau (35e).

7. Véhicule à selle (100) selon l'une quelconque des revendications 2 à 6, dans lequel la première partie inférieure (35a) de la première partie de stockage (35) de la poche de stockage (30) est positionnée plus bas que la partie d'extrémité avant (8c) de la surface d'assise (8a) du siège (8).

8. Véhicule à selle (100) selon l'une quelconque des revendications 1 à 7, dans lequel l'ouverture (33) de la poche de stockage (30) a une dimension maximale dans la direction de largeur de véhicule qui est supérieure à une dimension maximale dans la direction avant-arrière du véhicule.

9. Véhicule à selle (100) selon l'une quelconque des revendications 1 à 8, dans lequel la partie de surface arrière (24) du protège-jambes (20L, 20R) forme au moins une partie d'un espace de stockage (30a) de la poche de stockage (30).

10. Véhicule à selle (100) selon l'une quelconque des revendications 1 à 8, comprenant en outre: un panneau intérieur fixé au couvercle avant (18) ou au protège-jambes (20L, 20R), dans lequel un espace de stockage (30a) de la poche de stockage (30) est défini entre le protège-jambes (20L, 20R) et le panneau intérieur.

11. Véhicule à selle selon l'une quelconque des revendications 1 à 8, dans lequel, dans la vue en plan du véhicule, la partie de surface supérieure (23) du protège-jambes (20L, 20R) sur une partie périphérique de l'ouverture (33) de la poche de stockage (30) chevauche une partie d'un espace de stockage (30a) de la poche de stockage (30).

12. Véhicule à selle (100) selon l'une quelconque des revendications 1 à 11, dans lequel :
la poche de stockage (30) est capable de stocker un récipient à boisson (51), et
lorsque la partie de poignée (16) est dans une position le long de la direction de largeur de véhicule, un axe du récipient à boisson (51) stocké dans la poche de stockage (30) ne croise pas le couvercle de poignée (16b) de la partie de poignée (16).
